## Europäisches Patentamt
## European Patent Office
## Office européen des brevets

(19)

(11) Publication number: **0 080 816**
**B1**

(12) # EUROPEAN PATENT SPECIFICATION

(45) Date of publication of patent specification: **09.04.86**

(51) Int. Cl.⁴: **A 01 B 61/04**

(21) Application number: **82305962.1**

(22) Date of filing: **09.11.82**

(54) **Plough jump mechanism.**

(30) Priority: **10.11.81 AU 1497/81**

(43) Date of publication of application:
**08.06.83 Bulletin 83/23**

(45) Publication of the grant of the patent:
**09.04.86 Bulletin 86/15**

(84) Designated Contracting States:
**DE FR GB**

(56) References cited:
**DE-A-2 743 157**
**US-A-3 321 027**
**US-A-3 565 180**
**US-A-4 068 723**

(73) Proprietor: **AGROWPARTS PTY LTD.**
**30 Folkestone Pde.**
**Botany 2019 (AU)**

(72) Inventor: **Ryan, John William**
**30 Folkestone Pde**
**Botany 2019 (AU)**

(74) Representative: **Cheyne, John Robert Alexander**
**Mackenzie et al**
**HASELTINE LAKE & CO. 28 Southampton**
**Buildings Chancery Lane**
**London WC2A 1AT (GB)**

Courier Press, Leamington Spa, England.

## Description

The present invention relates to agricultural equipment and more particularly to a jump mechanism for a plough used to cultivate an earth layer.

It is a well known disadvantage of tyned ploughs that should an obstacle be encountered, it is not infrequent that the plough is damaged. This problem is exacerbated in the use of tyned ploughs, as described in Australian Patent Applications 38716/78 and 38717/78, where a very shallow digging angle is employed. In such ploughs the digging point can become jammed which results in the point of tyne being damaged.

U.S. Patents 4068723 and 3321027 and German Patent Application 2743157, each disclose a jump mechanism for a plough having a frame to support at least one shank, said mechanism comprising a generally horizontal main draw bar to be pivotally attached at one end to the frame so as to extend rearwardly therefrom and to be pivotally attached at the other end to said shank so that said shank can move relative to said frame by pivoting about two spaced horizontal axes one at each end of said bar, pivot control means to regulate pivoting of said shank about said other end of said bar relative to the pivoting of said bar at said one end, and force applying means for attachment to said frame and said shank to bias said shank to a predetermined digging position.

The jump mechanisms discussed in U.S. Patents 4068723 and 3321027 and German Patent Application 2743157 generally employ a parallelogram set of linkages with a toggle mechanism to bias the digging point to the working position. Upon sufficient force being applied to the digging point, the toggle mechanism is triggered and the point allowed to rise. These particular types of arrangements are unsatisfactory in deep soil working situations since the toggle mechanism lacks the mechanical leverage to relocate the digging point at the desired depth. Additionally, the parallelogram type arrangement tends to move the digging point more vertically than rearward, thereby again being unsuitable to a deep soil working situation.

It is an object of the present invention to overcome or substantially ameliorate the above disadvantages.

According to the present invention, said pivot control means comprises a control bar which extends rearwardly downwardly from a forward position above said one end to a rearward position below said other end, said control bar being pivotally attached to said frame at said forward position and pivotally attached to said shank at said rear position.

A preferred form of the present invention will now be described by way of example with reference to the accompanying drawings wherein:

Fig. 1 is a side elevation schematically depicting a jump mechanism for the digging tyne of a plough;

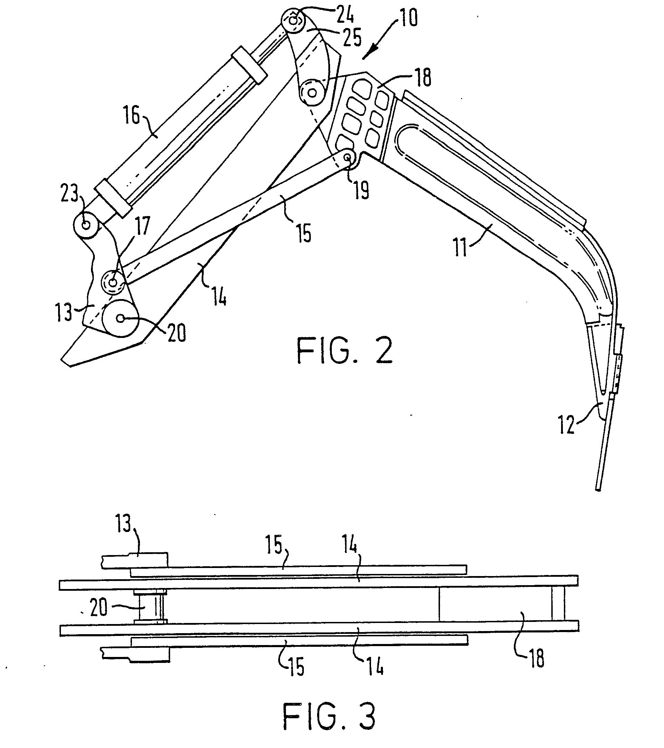

Fig. 2 is a side elevation schematically depicting the mechanism of Fig. 1 in a jump position;

Fig. 3 is a schematic plan view of the mechanism of Fig. 1.

In the attached drawing there is illustrated a jump mechanism 10 for a plough having a frame 13 and at least one shank 11 which receives a digging point 12. The jump mechanism enables pivoting movement of the shank 11 relative to the frame 13 about two horizontal transverse axes one of which is defined by a pin 20 and the other of which is defined by the pin 21.

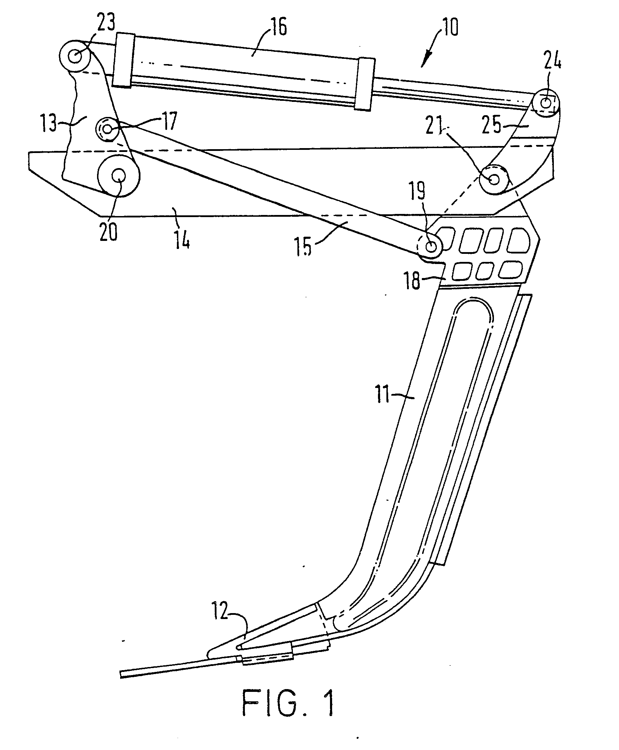

The jump mechanism 10 includes a main draw bar 14 which transfers the main towing force from the frame 13 to the shank 11 via the pins 20 and 21 which pivotally attach the bar 14 to the frame 13 and shank 11. The pin 21 engages a shank carrier 18 to which is fixed the shank 11. Extending from the frame 13 to a force transfer member 25 is a hydraulic ram 16, via pins 23 and 24, which biases the shank 11 to the digging position depicted in Fig. 1. The force transfer member 25 abuts the bar 14 and is pivotally attached to the ram 16 and carrier 18. The actual position of the shank 11 as seen in Fig. 1 is defined by firstly an abutment on the frame 13 which prevents clockwise movement of the bar 14 beyond the position depicted in Fig. 1, and secondly by an abutment on the carrier 18 which engages the bar 14 again to prevent clockwise movement of the shank 11 beyond the position depicted. A link 15 is provided as a control bar means to govern pivoting of the shank 11 about the pin 21 relative to the pivoting of the bar 14 about the pin 20.

The link 15 is pivotally coupled to the frame 13 by a pin 17 and is pivotally coupled to the shank carrier 18 by a pin 19. The pin 17 is positioned generally above the pin 20 while the pin 21 is positioned generally above the pin 19. However it should be appreciated that the relative positions of the pins 17 and 20 and 21 and 19 could be reversed. Also the pin 23 is positioned above the pin 20 as well as slightly forward thereof. As an alternative the ram 16 could be replaced by a spring.

In operation of the above mechanism 10 upon the digging point 12 encountering an obstacle, the shank is caused to pivot rearwardly. This results in two actions taking place, that is, the shank pivots about the pin 21 while simultaneously pivoting about the pin 20 at a rate controlled by the relative positions of the bar 14 and link 15. These two actions enable the shank to move rearward and upward to thereby overcome the obstacle. The upward movement of the shank 11 is provided mainly by movement about the pin 20 while the rearward movement is provided mainly by movement about the pin 21.

Upon the obstacle being overcome the shank again enters the soil as it is biased to the digging position by the ram 16.

The relative position of the pins 23 and 20 partly determines the clockwise torque applied to the bar 14 about the pin 20. This torque in turn applies a force to the shank 11 biasing the shank 11 back into the soil. In order for this biassing force to be of sufficient magnitude, the line of action of the ram 16 preferably has a normal distance from the pin 20 which is at least equal to the same normal distance in a digging mode of operation.

To further aid the point 12 in clearing the obstacle, the point 12 is located at least partly forward of the pin 20. This location of the point 12 causes the point to move slightly downward so it pivots rearward upon encountering an obstacle. Additionally the bar 14 and link 15 are manufactured of spring steel to allow flexing thereof. This again aids the point in overcoming the obstacle.

## Claims

1. A jump mechanism (10) for a plough having a frame (13) to support at least one shank (11), said mechanism (10) comprising a generally horizontal main draw bar (14) to be pivotally attached at one end to the frame (13) so as to extend rearwardly therefrom and to be pivotally attached at the other end to said shank (11) so that said shank (11) can move relative to said frame (13) by pivoting about two spaced transverse horizontal axes one at each end of said main draw bar (14), pivot control means (15) to regulate pivoting of said shank (11) about said other end of said main draw bar (14) relative to the pivoting of said main draw bar (14) at said one end, and force applying means (16) for attachment to said frame (13) and said shank (11) to bias said shank (11) to a predetermined digging position, characterized in that said pivot control means (15) comprises a control bar which extends rearwardly downwardly from a forward position above said one end to a rearward position below said other end, said control bar (15) being pivotally attached to said frame (13) at said forward position and pivotally attached to said shank (11) at said rear position.

2. A jump mechanism as claimed in claim 1, characterized in that said control bar (15), is pivotally attached to said frame (13) adjacently above said one end of said main draw bar (14) and is pivotally attached to said shank (11) adjacently below said other end of said main draw bar (14).

3. A jump mechanism as claimed in claim 2, characterized in that said shank (11) is fixed at its upper end to a shank carrier (18) which supports said shank (11), and said main draw bar (14) and control bar (15) are pivotally attached to said shank carrier (18).

4. A jump mechanism as claimed in claim 3, characterized in that said force applying means (16) is a hydraulic ram (16).

5. A jump mechanism as claimed in any one of claims 1 to 4, characterized in that said force applying means (16) is attached to said other end of said main draw bar (14) and to said frame.

6. A jump mechanism as claimed in any one of claims 3 to 5, characterised in that a force transmitting member (25) pivotally connects one end of said force applying means (16) to said carrier (18), and in that said force transmitting member (25) abuts said main draw bar (14) to define the normal working position of said shank (11).

7. A plough having a jump mechanism (10) according to any one of claims 1 to 6.

## Patentansprüche

1. Federmechanismus (10) für einen Pflug mit einem Rahmen (13) zum Halten wenigstens eines Schaftes (11), wobei der Federmechanismus (10) eine im wesentlichen horizontale Haupt-Zugstange aufweist, die schwenkbar an einem Ende am Rahmen (13) derart angebracht it, daß sie sich von dort rückwärts erstreckt, und am anderen Ende schwenkbar am Schaft (11) derart angebracht ist, daß letzterer sich relativ zum Rahmen (13) durch Schwenken um zwei in einem Abstand angeordnete querverlaufende horizontale Achsen bewegen kann, von denen eine an jedem Ende der Haupt-Zugstange (14) angeordnet ist, und Mittel (15) zum Steuern der Schwenkbewegung des Schaftes (11) um das andere Ende der Zugstange (14) relativ zur Schwenkbewegung der Haupt-Zugstange (14) an dem einen Ende und Mittel (16) zum Aufbringen einer Kraft, die mit dem Rahmen (13) und dem Schaft (11) verbunden sind, vorgesehen sind, um den Schaft (11) in einer vorbestimmte Grabposition vorzubelasten, dadurch gekennzeichnet, daß die Mittel (15) zum Steuern der Schwenkbewegung eine Steuerstange aufweisen, die sich aus einer vorderen Position über dem einen Ende zu einer rückwärtigen Position unter dem anderen Ende rückwärts und nach unten erstreckt, und die Steuerstage (15) schwenkbar mit dem Rahmen (13) in der vorderen Position und schwenkbar mit dem Schaft (11) an der rückwärtigen Position verbunden ist.

2. Federmechanismus nach Anspruch 1, dadurch gekennzeichnet, daß die Steuerstange (15) nahe dem einen Ende der Haupt-Zugstange (14) und oberhalb desselben schwenkbar mit dem Rahmen (13) verbunden ist und nahe dem anderen Ende der Haupt-Zugstange unterhalb desselben schwenkbar mit dem Schaft (11) verbunden ist.

3. Federmechanismus nach Anspruch 2, dadurch gekennzeichnet, daß der Schaft (11) an seinem oberen Ende an einem Schafthalter (18) angebracht ist, der den Schaft (11) trägt. und die Haupt-Zugstange (14) und Steuerstange (15) schwenkbar mit dem Schaftträger (18) verbunden sind.

4. Federmechanismus nach Anspruch 3, dadurch gekennzeichnet, daß das Mittel (16) zum Aufbringen der Kraft als hydraulischer Arbeitszylinder ausgebildet ist.

5. Federmechanismus nach einem der Ansprüche 1—4, dadurch gekennzeichnet, daß das Mittel (16) zum Aufbringen der Kraft mit dem anderen Ende der Haupt-Zugstange (14) und mit dem Rahmen verbunden ist.

6. Federmechanismus nach einem der Ansprüche 3 bis 5, dadurch gekennzeichnet, daß ein Kraftübertragungsglied (25) schwenkbar ein Ende des Mittels (16) zum Aufbringen der Kraft mit dem Halter (18) verbindet und das Kraftübertragungsglied (25) an der Haupt-Zugstange (14) anliegt, um die normale Arbeitsposition des Schaftes (11) zu bestimmen.

7. Ein Pflug mit einem Federmechanismus gemäß einem der Ansprüche 1 bis 6.

**Revendications**

1. Mécanisme (10) d'évitement d'obstacles pour une charrue comprenant un cadre (13) pour supporter au moins une tige (11), ledit mécanisme (10) comportant une barre de traction principale (14) sensiblement horizontale, fixée de façon pivotante au cadre (13) à une première extrémité, de manière à s'étendre vers l'arrière à partir de ce cadre, et reliée de façon pivotante à la tige (11) à l'autre extrémité, de sorte que la tige (11) peut se déplacer par rapport au cadre (13) par pivotement autour de deux axes horizontaux transversaux espacés, un à chaque extrémité de la barre de traction principale (14), des moyens (15) de commande de pivotement pour déterminer le pivotement de la tige (11) autour de ladite autre extrémité de la barre (14) de traction principale par rapport au pivotement de la barre (14) de traction principale à ladite première extrémité, et des moyens d'application de force (16) fixés au cadre (13) et à la tige (11) de manière à pousser la tige (11) à une position de pénétration prédéterminée, caractérisé en ce que les moyens de commande de pivotement (15) comprennent une barre de commande qui s'étend vers l'arrière et vers le bas, d'une position avant située au-dessus de ladite première extrémité à une position arrière située au-dessous de ladite autre extrémité, la barre de commande (15) étant fixée de façon pivotante au cadre (13) à ladite position avant et

fixée de façon pivotante à la tige (11) à ladite position arrière.

2. Mécanisme d'évitement d'obstacles suivant la revendication 1, caractérisé en ce que la barre de commande (15) est fixée de façon pivotante au cadre (13) au-dessus et près de ladite première extrémité de la barre de traction principale (14) et est fixée de façon pivotante à la tige (11) au-dessous et près de ladite autre extrémité de la barre de traction principale (14).

3. Mécanisme d'évitement d'obstacles suivant la revendication 2, caractérisé en ce que la tige (11) est fixée à son extrémité supérieur à un support de tige (18) qui supporte la tige (11), et la barre de traction principale (11) et la barre de commande (15) sont fixées de façon pivotante au support de tige (18).

4. Mécanisme d'évitement d'obstacles suivant la revendication 3, caractérisé en ce que lesdits moyens d'application de force (16) comprennent un vérin hydraulique (16).

5. Mécanisme d'évitement d'obstacles suivant l'une quelconque des revendications 1 à 4, caractérisé en ce que les moyens d'application de force (16) sont fixés à ladite autre extrémité de la barre de traction principale (14) et au cadre.

6. Mécanisme d'évitement d'obstacles suivant l'une quelconque des revendications 3 à 5, caractérisé en ce qu'une pièce (25) de transmission de force relie de façon pivotante une extrémité des moyens (16) d'application de force audit support (18), et en ce que la pièce (25) de transmission de force bute contre la barre de traction principale (14) pour définir la position normale de travail de la tige (11).

7. Charrue comportant un mécanisme (10) d'évitement d'obstacles suivant l'une quelconque des revendications 1 à 6.

FIG. 1

FIG. 2

FIG. 3